**Europäisches Patentamt**

**European Patent Office**

**Office européen des brevets**

(19)

(11) Veröffentlichungsnummer: **0 245 532 B1**

## (12) EUROPÄISCHE PATENTSCHRIFT

(45) Veröffentlichungstag der Patentschrift: **29.05.91**

(51) Int. Cl.5: **H04N 9/64**

(21) Anmeldenummer: **86106606.6**

(22) Anmeldetag: **10.05.86**

(54) Digitale Schaltungsanordnung zur Verarbeitung eines FBAS-Signals.

(43) Veröffentlichungstag der Anmeldung:
**19.11.87 Patentblatt 87/47**

(45) Bekanntmachung des Hinweises auf die
Patenterteilung:
**29.05.91 Patentblatt 91/22**

(84) Benannte Vertragsstaaten:
**DE FR NL**

(56) Entgegenhaltungen:
**EP-A- 0 080 014**
**EP-A- 0 169 930**
**DE-A- 3 428 318**

**TECHNOLOGIE DE POINTE POUR LE TRAITE-
MENT DES SIGNAUX, Journées
d'électronique, 14.-16. Oktober 1975, Lausanne, CH, Seiten 49-71; R.E. BEST: "Signal processing with phase locked loops"**

(73) Patentinhaber: **Deutsche ITT Industries GmbH
Hans-Bunte-Strasse 19 Postfach 840
W-7800 Freiburg i.Br.(DE)**

(72) Erfinder: **Mehrgardt, Sönke, Dr.
Häglestrasse 26
W-7806 March(DE)**

## Beschreibung

Die Erfindung betrifft eine digitale Schaltungsanordnung zur Verarbeitung eines FBAS-Signals mit einem ersten und einem zweiten Multiplizierer, deren jeweils erstem Eingang das digitale FBAS-Signal zugeführt ist, und mit einem frequenzeinstellbaren und -regelbaren digitalen Sinusgenerator, dessen Sinus- bzw. Cosinusausgang mit dem zweiten Eingang des ersten bzw. zweiten Multiplizierers verbunden ist und der Bestandteil einer PLL-Schleife ist, vgl. den Oberbegriff des Patentanspruchs. Eine derartige Anordnung ist in der vorveröffentlichten europäischen Patentanmeldung EP-A-0 169 930 (ITT-case S.Mehrgardt et al 3-3-5-21) als Eingangsteil des Aufnahme- und Wiedergabeteils eines Videorecorders beschrieben.

Die Aufgabe der im Anspruch gekennzeichneten Erfindung besteht darin, unter Heranziehung dieser vorbeschriebenen Teilschaltungen einen digitalen Farbdemodulator anzugeben, der alle drei heute üblichen und klassischen Farbfernsehstandards (PAL, NTSC, SECAM) zu demodulieren gestattet, ohne daß für jeden Farbfernsehstandard ein eigener Demodulator, wie an sich bisher üblich, erforderlich wäre.

Durch die Erfindung ergibt sich somit unter anderem der Vorteil, daß die für die PAL- bzw. NTSC-Demodulation vorhandenen Teilschaltungen für die SECAM-Demodulation mitbenutzt werden können und dafür nur eine im Vergleich zur Gesamtschaltung geringfügige Schaltungserweiterung erforderlich ist.

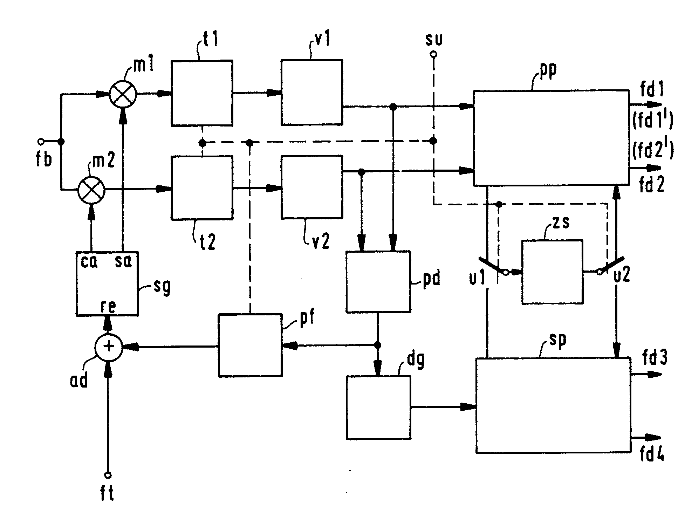

Das in der Figur der Zeichnung dargestellte Blockschaltbild eines Ausführungsbeispiels der Erfindung dient der näheren Erläuterung. Es zeigt den ersten und den zweiten Multiplizierer m1, m2, deren jeweils erstem Eingang das digitale FBAS-Signal fb zugeführt ist. Dieses wird in üblicher Weise mittels eines schnellen Analog-Digital-Wandlers aus dem aus dem Antennensignal des Farbfernsehempfängers gewonnenen analogen FBAS-Signal gebildet, wie dies auch in der eingangs genannten Veröffentlichung angegeben ist.

Der jeweils zweite Eingang der beiden Multiplizierer m1, m2 ist mit dem Sinusausgang sa bzw. Cosinusausgang ca des frequenzeinstellbaren und -regelbaren digitalen Sinusgenerators sg verbunden. Der jeweilige Ausgang der beiden Multiplizierer m1, m2 liegt über jeweils den ersten bzw. zweiten Tiefpaß t1, t2 am Eingang des ersten bzw. zweiten Verstärkungsreglers v1, v2. Die Charakteristik der beiden Tiefpässe t1, t2 ist so zu wählen, daß die fernseh-standard-gemäße Bandbreite bzw. der Amplitudengang (Glockenkurve bei SECAM) erreicht werden.

Der jeweilige Ausgang der beiden Verstärkungsregler v1, v2 liegt am zugehörigen Eingang des PAL/NTSC-Prozessors pp, an dessen beiden Ausgängen die digitalen PAL-Farbdifferenzsignale fd1, fd2 bzw. die beiden NTSC-Farbdifferenzsignale fd1', fd2' abgenommen werden können.

Der jeweilige Ausgang der beiden Verstärkungsregler v1, v2 liegt ferner an den beiden Eingängen des Phasendemodulators pd, dessen Ausgang über das PLL-Filter pf und die eine Eingangs-Ausgangs-Strecke des Addierers ad mit dem Regeleingang re des Sinusgenerators sg verbunden ist. Dieser ist somit Bestandteil einer PLL-Schleife, welches Prinzip in der eingangs genannten Veröffentlichung ebenfalls bereits angegeben ist.

Der Ausgang des Phasendemodulators pd liegt ferner über das Differenzierglied dg am Eingang des SECAM-Prozessors sp, an dessen beiden Ausgängen die digitalen SECAM-Farbdifferenzsignale fd3, fd4 abgenommen werden können.

Schließlich ist noch der Zeilenspeicher zs vorgesehen, der entweder dem PAL/NTSC- oder dem SECAM-Prozessor pp, sp mittels der beiden Umschalter u1, u2 zugeschaltet werden kann, wobei diese beiden Schalter sowie entsprechende Umschalter in den beiden Tiefpässen t1, t2 vom Umschaltsignal su gesteuert sind, dessen einer Pegel auftritt, wenn ein PAL- oder NTSC-FBAS-Signal zu verarbeiten ist, oder dessen anderer Pegel auftritt, wenn ein SECAM-FBAS-Signal zu demodulieren ist. Durch letzteren Pegel wird auch die Durchlaßcharakteristik der beiden Tiefpässe t1, t2 auf die für die SECAM-Verarbeitung erforderliche Glocken-Charakteristik umgeschaltet, und es wird die PLL-Schleife aufgetrennt.

Der Zeilenspeicher zs dient bei PAL als Kammfilter, dagegen bei SECAM als Zeilenwiederholstufe.

Am zweiten Eingang des Addierers ad liegt der jeweilige Farbträger ft, d.h. also ein Signal, dessen Frequenz gleich der Farbträgerfrequenz des jeweiligen Farbfernsehstandards ist bzw. bei SECAM der Mittenfrequenz des Glockenfilters entspricht.

Mittels der beiden Multiplizierer, der beiden Tiefpaßfilter und der beiden Verstärkungsregler wird das FBAS-Signal synchrondemoduliert, d.h. es wird von der Bild-Zwischenfrequenz in die Basisbandlage umgesetzt. Die weitere bzw. eigentliche Demodulation erfolgt nun für PAL/NTSC-Signale mittels des zugeordneten Prozessors pp. während für SECAM-Signale der aus dem Phasendemodulator pd mit nachgeschaltetem Differenzierglied dg bestehende Frequenzdemodulator sowie der SECAM-Prozessor sp vorgesehen sind. Der Phasendemodulator pd ist daher von besonders guter Linearität, was sich wiederum auch auf die Regeleigenschaften der PLL-Schleife sehr vorteilhaft auswirkt. Die erfindungsgemäße Kombination der Demodulation von PAL/NTSC- und SECAM-Signalen ergibt somit den weiteren Vorteil, daß die für die SECAM-Demodulation günstigen Eigenschaften des Phasendemodulators pd auch für die PLL-Schleife ausgenutzt werden können.

Andererseits ergeben sich durch die erwähnte Synchrondemodulation zwei in Quadratur zueinander stehende Signale, die für die SECAM-Frequenzdemodulation erforderlich sind, sozusagen von selbst, was als Vorteil des wegen des PAL/NTSC-Standards an sich vorgesehenen Synchrondemodulators zugunsten der SECAM-Demodulation zu werten ist.

Die Schaltungsanordnung nach der Erfindung kann nicht nur in Farbfernsehempfängern, sondern auch in Videorecordern verwendet werden, in welchem Fall die oben erwähnten Ausgangssignale der beiden Prozessoren pp, sp beispielsweise zur Weiterverarbeitung entsprechend der eingangs genannten Veröffentlichung dienen.

Es ist auch möglich, die in der genannten Veröffentlichung vorgesehene Dezimierung in die Tiefpässe t1, t2 einzubeziehen. Das hat dann den Vorteil, daß anstatt der in der Figur gezeigten zwei getrennten Verarbeitungswege nurmehr einer erforderlich ist, auf dem die beiden Farbdifferenzsignale in Zeitmultiplex vorliegen.

Wie für digitale Signalverarbeitung in Farbfernsehgeräten üblich, sind auch bei der Erfindung die gezeigten Signalwege als Busse gedacht, auf denen mehrstellige Digitalwörter übertragen werden, da die digitale Signalverarbeitung im wesentlichen parallel geschieht.

Die Realisierung geschieht bevorzugt mittels integrierter Halbleiterschaltungen, insb. MOS-Schaltungen.

## Ansprüche

1. Digitale Schaltungsanordnung zur Verarbeitung eines FBAS-Signals (fb) mit einem ersten und einem zeiten Multiplizierer (m1, m2), deren jeweils erstem Eingang das digitale FBAS-Signal (fb) zugeführt ist, und mit einem frequenzeinstellbaren und -regelbaren digitalen Sinusgenerator (sg), dessen Sinus- bzw. Cosinus-Ausgang (sa, ca) mit dem zweiten Eingang des ersten bzw. zweiten Multiplizierers (m1, m2) verbunden ist und der Bestandteil einer PLL-Schleife ist,

gekennzeichnet durch folgende Merkmale:

- der jeweilige Ausgang des ersten bzw. zweiten Multiplizierers (m1, m2) liegt über jeweils einen ersten bzw. zweiten von einer PAL/NTSC- auf eine SECAM-Durchlaßkurve umschaltbaren Tiefpaß (t1, t2) am Eingang eines ersten bzw. zweiten Verstärkungsreglers (v1, v2),

- dessen jeweiliger Ausgang liegt einerseits an jeweils einem Eingang eines Phasendiskriminators (pd) und andererseits am zugehörigen Eingang eines PAL/NTSC-Prozessors (pp), dessen Ausgangssignale die digitalen PAL-Farbdifferenzsignale (fd1, fd2) bzw. die digitalen NTSC-Farbdifferenzsignale (fd1', fd2') sind,

- der Ausgang des Phasendemodulators (pd) liegt einerseits über ein PLL-Filter (pf) am ersten Eingang eines Addierers (ad) und andererseits über ein Differenzierglied (dg) am Eingang eines SECAM-Prozessors (sp), dessen Ausgangssignale die digitalen SECAM-Farbdifferenzsignale sind,

- dem zweiten Eingang des Addierers (ad) ist der jeweilige Farbträger (ft) zugeführt, und sein Ausgang liegt am Regeleingang (re) des Sinusgenerators (sg), und

- ein Zeilenspeicher (zs) ist entsprechend dem Standard, in dem das FBAS-Signal (fb) vorliegt, entweder dem PAL/NTSC-Prozessor (pp) als Kammfilter oder dem SECAM-Prozessor (sp) als Zeilenwiederholstufe zuschaltbar.

## Claims

1. Digital circuit arrangement for processing a composite color signal (fb) with a first multiplier (m1) and a second multiplier (m2) the first input of each of which is supplied with the digital composite color signal (fb), and with a frequency-settable and -controllable digital sine-wave generator (sg) having its sine and cosine outputs (sa, ca) connected to the inputs of the first and second multipliers (m1, m2), respectively, and forming part of a phase-locked loop,

characterized by the following features:

- The outputs of the first multiplier (m1) and the second nultiplier (m2) are connected to the inputs of a first gain controller (v1) and a second gain controller (v2) via a first low-pass filter (t1) and a second low-pass filter (t2) which are switchable from a PAL/NTSC passband characteristic to a SECAM passband characteristic;

- the output of each of the gain controllers (v1, v2) is connected, on the one hand, to one of the inputs of a phase discriminator (pd) and, on the other hand, to the associated input of a PAL/NTSC processor (pp) whose output signals are the digital PAL color-difference signals (fd1, fd2) or the digital NTSC color-difference signals (fd1', fd2');
- the output of the phase demodulator (pd) is connected, on the one hand, via a PLL filter (pf) to the first input of an adder (ad) and, on the other hand, via a differentiator (dg) to the input of a SECAM processor (sp) whose output signals are the digital SECAM color-difference signals;
- the second input of the adder (ad) is presented with the respective chrominance subcarrier (ft), and the output of the adder (ad) is coupled to the control input (re) of the sine-wave generator (sg), and
- a line memory (zs) is connectable either as a comb filter to the PAL/NTSC processor (pp) or as a line repeat stage to the SECAM processor (sp) according to the standard in which the composite color signal (fb) is present.

**Revendications**

1. Montage numérique pour le traitement d'un signal complet de chrominance (fb), possédant des premier et second multiplicateurs (m1,m2), à une première entrée desquels est envoyé le signal numérique complet de chrominance (fb), et un générateur numérique de signaux sinusoïdaux (sg), réglable en fréquence, dont la sortie du signal sinus ou la sortie du signal cosinus (sa, ca) est raccordée à la seconde entrée du premier ou du second multiplicateur (m1,m2) et fait partie d'une boucle PLL,
caractérisé par les caractéristiques suivantes :
   - la sortie respective du premier ou du second multiplicateur (m1,m2) est raccordée, par l'intermédiaire d'un premier ou d'un second filtre passe-bas (t1,t2) commutable depuis une courbe passante PAL/NTSC à une courbe passante SECAM, à l'entrée d'un premier ou d'un second régulateur d'amplification (v1,v2),
   - dont la sortie respective est raccordée, d'une part, à une entrée respective d'un discriminateur de phase (pd) et, d'autre part, à l'entrée associée d'un processeur PAL/NTSC (pp), dont les signaux de sortie sont les signaux numériques de différences de couleurs PAL (fd1,fd2) ou les signaux numériques de différences de couleurs NTSC (fd1', fd2'),
   - la sortie du démodulateur de phase (pd) est raccordée, d'une part, au moyen d'un filtre PLL (pf), à la première entrée d'un additionneur (ad) et, d'autre part, au moyen d'un circuit différentiateur (dg), à l'entrée d'un processeur SECAM (sp), dont les signaux de sortie constituent les signaux numériques de différences de couleurs SECAM,
   - la porteuse couleur respective (ft) est envoyée à la seconde entrée de l'additionneur (ad), dont la sortie est raccordée à l'entrée de réglage (re) du générateur de signaux sinusoïdaux (sg), et
   - une mémoire de lignes (zs) peut être raccordée de façon additionnelle, en fonction de la norme avec laquelle est présent le signal complet de chrominance (fb), soit au processeur PAL/NTSC (pp) en tant que filtre en peigne, soit au processeur SECAM (s), sous la forme d'un étage de répétition de lignes.